# EUROPEAN PATENT APPLICATION

(11) **EP 0 622 145 A1**
(43) Date of publication of application: **02.11.1994**
(21) Application number: 93830088.6
(22) Date of filing: 04.03.1993
(51) Int. Cl.: B23D 47/02

(54) **A portable circular saw of slide compound type**

(71) Applicant: STAYER S.p.A., I-44100 Ferrara (IT)
(72) Inventor: Meroni, Simone, I-20030 Seveso, (Milano) (IT)
(74) Representative: Lanzoni, Luciano

(57) **Abstract**

In a circular saw (1) of slide compound design, typically comprising a base (2) designed to stand freely on a bench, with a supporting structure (3) mounted to the base (2) and carrying a power-driven saw blade (4), the base consists in a plinth (5) surmounted by and supporting a table (6) and two sliding rests (7) on which work (8) is positioned for cutting. The connection between the components is such that the table (6) can be rotated about an axis perpendicular to the plinth (5) between two limit positions, while the rests (7) are disposed mutually parallel one on either side of the table and slidable longitudinally along their own axes; the table (6) affords a longitudinal slot (14) to receive the blade, and is connected mechanically to the rests in such a way that one rest (7) at least will retract when the table is rotated towards it.

## Description

The present invention falls within the art field of portable or transportable power cutting tools, and relates to a circular saw capable of making cross, mitre, bevel and compound cuts. The cutting tool of such machines consists in a circular blade rigidly and interchangeably associated with the spindle of a motor, typically electric, by which it is set in rotation. The motor and the blade form part of an assembly referred to as the saw head.

The prior art embraces circular saws with compound cutting capabilities suitable for metals or wood, which are also portable, i.e. such as can be taken with ease onto construction sites, in particular, or at all events used in locations other than those equipped with permanently installed machines, where the need exists for materials to be cut to shape.

A circular saw of this type consists in a base or frame, designed to stand on a bench or work-top, which supports both the saw head and the work and affords a perpendicular fence against which the workpiece is positioned and checked during the cut.

The base affords an integrally incorporated recess of circular shape freely accommodating a matching circular plate by which the saw head is supported, in the manner typical of cross-cut machines. More exactly, the saw head is mounted to a supporting structure associated with the circular plate by way of a cylindrical hinge, and rotatable thus about a horizontal axis down onto the work to make a cross cut, then upwards and away from the work toward an at-rest position. The cylindrical hinge in its turn is anchored to the circular plate by way of a short column, mounted pivotably and in such a manner that the saw head can also be rotated together with the supporting structure about a second horizontal axis perpendicular to the hinge axis, and the blade thus tilted from the vertical.

In addition, extra cross-cutting width is obtained by mounting the saw head supporting structure to a slide, capable of movement allowed by guide rods disposed transversely to the axis of the base and carried by the components of the cylindrical hinge.

Accordingly, besides lifting and tilting, the saw head is able to slide on the rods transversely to the work, moving between a retracted position and an extended position. With this additional linear movement, the saw is able to cross-cut work wider than would be possible with angular movement alone.

The circular plate performs a role of particular importance in correct use of the saw by providing the table or platform needed to support the work, and by allowing full penetration of the saw blade, affording as it does a radial slot or channel in which the rotating tool is insertable and slidable during the cut.

No great difficulty is encountered when using such a saw as long as the transverse dimensions of the work remain within modest limits, since the support provided by the circular plate is adequate.

Conversely, problems will tend to arise with wider pieces, when the saw head needs to be traversed on the guide rods toward the forward position in order to carry the blade completely through the work. It will be clear, in effect, that with the diametral dimensions of the circular plate minimized to gain the compactness required in a portable machine, or rather, with a plate of radial dimensions such that the work overhangs in part when positioned for the cut and the saw head moves outside the dimensional compass of the plate when traversed to the forward position, the plate can neither support the work satisfactorily nor afford any means of guiding the blade when cutting through the overhang.

The immediate remedy might be to utilize a more generously proportioned circular plate, of which the radial dimensions coincide substantially with the travel afforded to the saw head by the guide rods; such a solution is not readily practicable however, inasmuch as the machine as a whole must remain compact, i.e. reduced as far as possible in weight and dimensions, otherwise its essentially portable character will be lost.

EP 242 733 discloses a circular saw of the type in question, with a base affording a circular recess and a matching circular plate accommodated freely by the recess, in which the plate is provided with a radial arm incorporating a slot aligned with the slot afforded by the plate. In addition, the base presents a further recess positioned on the side occupied by the radial arm and merging with the circular recess, of which the flanks serve to limit the movement of the arm.

The object of achieving a lightweight construction is realized in a circular saw of this design, thus dispensing with any notion of an enlarged circular plate (of which the radius would correspond to the increased width obtained by addition of the radial arm), but with the accompanying drawback that the angular excursion allowed to the circular plate and the associated radial arm is limited; in effect, the periphery of the circular recess must describe an arc at least in excess of 180^{o}, if the plate is to be permanently restrained. Moreover, any attempt to increase the excursion of the arm by widening the angle of the relative recess will result in a reduction of the surface affording support to the work, and in consequence a reduced stability of the work itself.

Accordingly, the object of the present invention is to provide a portable slide compound saw in which the drawbacks mentioned above are overcome.

The stated object is realized in a portable slide compound saw according to the present invention, which is of the type comprising a base, and a saw head equipped with a motorized circular saw blade mounted to a support assembly pivotably associated with a table forming a part of the base, wherein the saw head is rotatable together with the table about a vertical axis, also pivotable toward and away from the table at least about a horizontal axis and slidable horizontally in relation to the table between two limit positions, characterized in that the base comprises a plinth, surmounted by a table of substantially rectangular embodiment, also by two sliding rests disposed within the same plane as that occupied by the table and positioned to support the work; in that the table and the sliding rests are supported by and connected to the plinth in such a way that the table is rotatable between two angular limit positions about a vertical axis perpendicular to the plinth, with the two sliding rests disposed one on either side of the table and capable of linear movement along their respective longitudinal axes; in that the table affords a longitudinal slot positioned to coincide with the plane occupied by and accommodating the horizontal sliding movement of the circular saw blade; and in that the table and the sliding rests are connected one to another by mechanical means arranged in such a way that a rotation of the table will induce the retraction of the rest toward which the table is directed, and the extension of the remaining rest.

The invention will now be described in detail, by way of example, with the aid of the accompanying drawings, in which:
- fig 1 is a perspective view of the circular saw according to the invention;
- figs 2 and 3 are respective plan views of the circular saw of fig 1, illustrating two different operating configurations;
- fig 4 illustrates the circular saw of fig 1 in a side elevation, with certain parts cut away better to reveal others;
- fig 5 illustrates the circular saw of fig 1 in a rear elevation, with certain parts cut away better to reveal others;
- fig 6 illustrates the circular saw of fig 1 in a rear elevation, with certain parts cut away better to reveal others and with an alternative embodiment of the mechanical connection between the table and the sliding rests.

Referring to the accompanying drawings, 1 denotes a circular saw comprising a base 2, such as can stand on a work-top or a bench, a support assembly 3, and a power-driven circular saw blade 4 carried by the support assembly 3.

The base 2 is composed of a plinth 5, surmounted by a table 6 and a pair of substantially rectangular sliding rests 7. The plinth 5 itself is essentially rectangular and stands directly on the work-top or bench, whilst the table 6 and the sliding rests 7 are positioned on and supported by the plinth 5. The base also comprises a fence 19, supported by the plinth 5 and elevated above the table 6 and the sliding rests 7, against which to position work 8 for cutting.

The table 6 is anchored rotatably at one end to the plinth 5 underneath by way of a bearing pivot 11, of which the axis is disposed perpendicular to both the table and the plinth and occupies substantially the same plane as that occupied by the fence 19. The support assembly 3, carried by the end of the table 6 nearer to the bearing pivot 11, is embodied in such a manner (to be described in due course) that the parts directly associated with the table 6 are located on the side of the bearing pivot 11 and the fence 19 opposite from the side occupied by the circular saw blade 4. More precisely, the support assembly 3 is disposed between the pivot 11 and the corresponding shorter end of the table, whereas the circular saw blade 4 lies above the longer part of the table 6 extending between the pivot 11 and the end remote from the pivot.

14 denotes a longitudinal channel or slot afforded by the table 6, disposed in the same plane as that occupied by the circular saw blade 4, which extends away from the bearing pivot 11 toward the end of the table remote from the pivot.

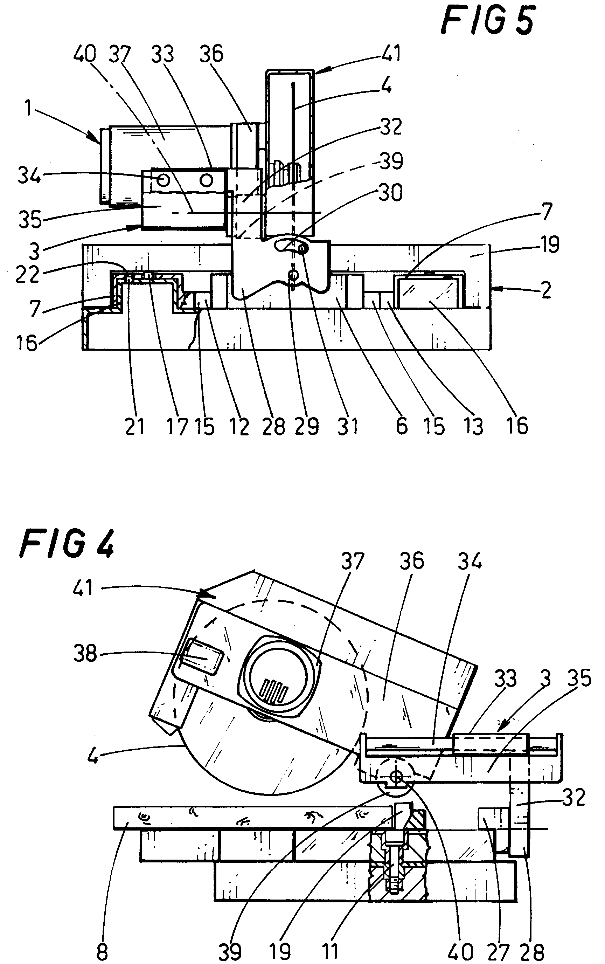

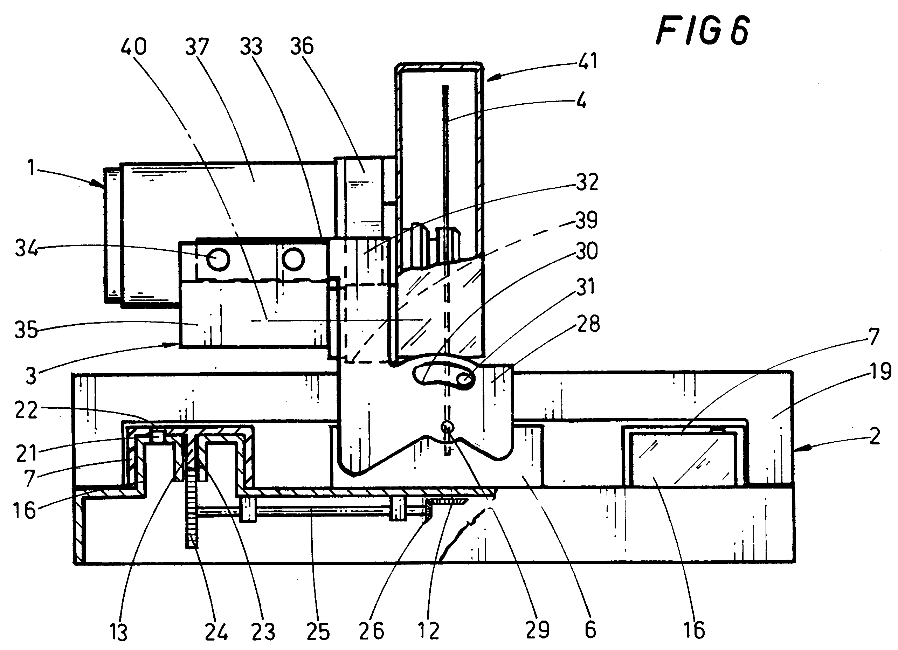

The sliding rests 7 are disposed mutually parallel, positioned on opposite sides of the table 6 and at right angles to the fence 19, and supported by the plinth 5 in such a way as to allow movement, each along its own longitudinal axis, between two limit positions. The rests 7 are of hollow embodiment, open on one face, and seated on two corresponding raised guide profiles 16 offered by the plinth 5, each of which affording a fixed vertical pin 17 accommodated in a longitudinal slot 18 afforded by the relative rest 7. Each rest 7 is thus capable of movement over and along the respective raised guide profile 16 between a retracted limit position fully back against the profile, and an extended position fully forward from the relative profile 16 with one end of the slot 18 engaging the pin 17; the limit positions in question are described as "extended" and "retracted" in relation to the fence 19. The forwardmost end of each sliding rest 7 presents an angled face 10, functioning as a stop against which the table 6 locates when moved to a relative limit position. Each guide profile 16 is shaped to match the angled face 10 of the relative sliding rest 7 at the forwardmost end, and affords a recess 20 on the side directed toward the table 6 that serves to accommodate the shorter end of the table 6 when the longer end is positioned against the angled face 10 of the rest 7 opposite (see fig 3). As discernible from fig 5, each of the raised guide profiles 16 also affords a second vertical pin 21 accommodated in a groove 22 afforded by the internal surface of the sliding rest 7 offered to the profile 16.

The table 6 and the sliding rests 7 are connected one to another by mechanical means, denoted 9 in their entirety, such as will induce the retraction at least of the sliding rest 7 toward which the table 6 is rotated, as illustrated in fig 3.

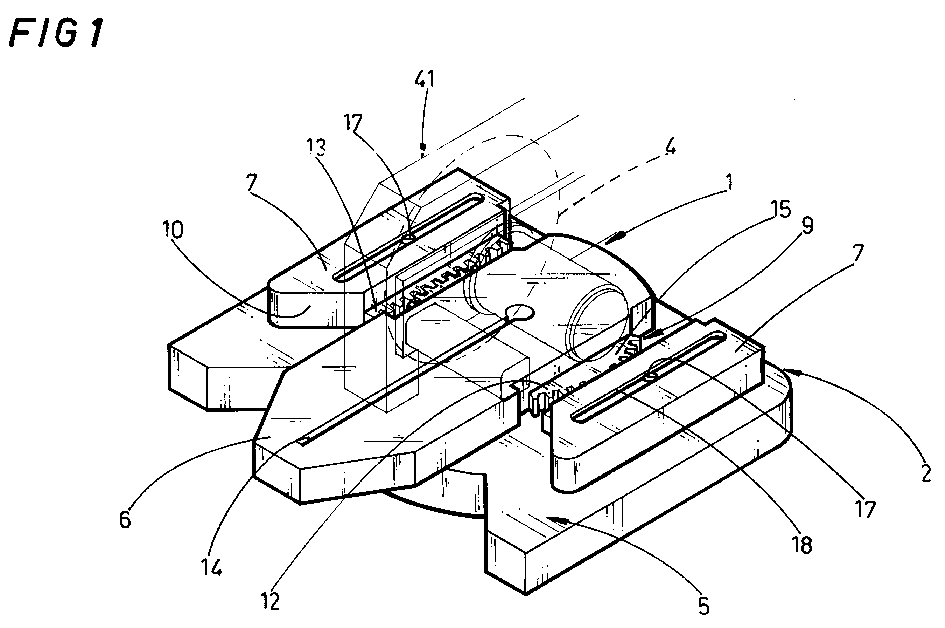

In the example of figs 1 to 3, mechanical means 9 consist in a gear wheel 12 rigidly associated with the table 6 and engaged in constant mesh with a pair of racks 13, each associated rigidly with a respective sliding rest 7.

The gear wheel 12 and the two racks 13 might be positioned above the plinth 5, as in figs 1 to 3, in which case the gear wheel 12 could be replaced by a pair of sector gears 15 disposed on opposite sides of the table 6.

In an alternative arrangement, shown in fig 6, the gear wheel 12 and the racks 13 are housed within a plinth 5 of suitably hollow embodiment, associated rigidly with the table 6 and the sliding rests 7, respectively, and interconnected by means inside the plinth 5. Observing the left hand portion of fig 6, the gear wheel 12 appears as a bevel wheel keyed to the bottom end of the bearing pivot 11, whilst the rack 13 forms an integral part of the sliding rest 7 projecting downward internally of a relative longitudinal seating 23 afforded by the top of the raised guide profile 13, which will be shaped accordingly. The bottom of the longitudinal seating 23 affords an opening (not illustrated in the drawings) through which a further gear 24 can be introduced from beneath and engaged in mesh with the rack 13; this further gear 24 is keyed to one end of a shaft 25 supported freely by the plinth 5, of which the remaining end carries a keyed bevel pinion 26 in mesh with the bevel wheel 12.

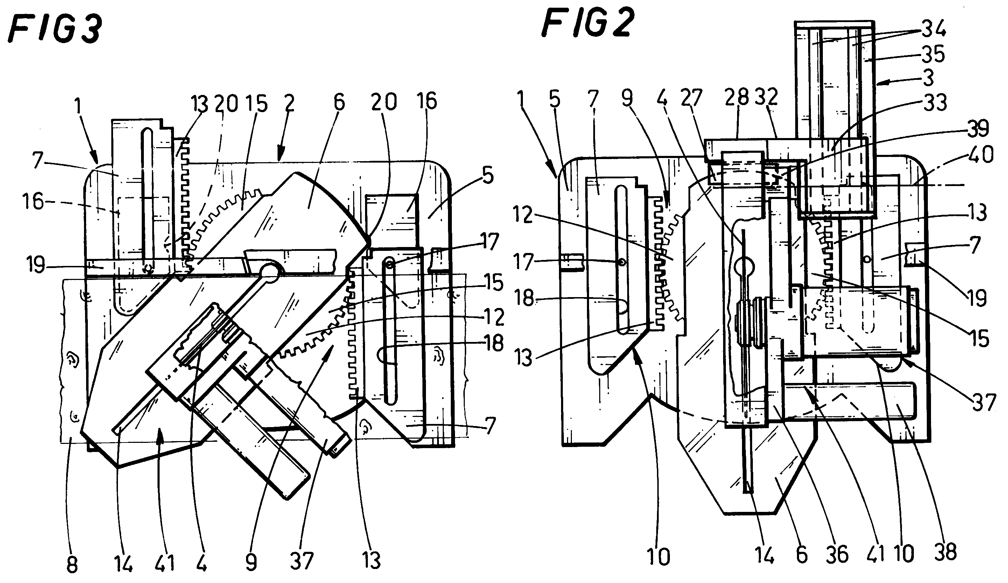

As discernible from figs 2, 4, 5 and 6, the support assembly 3 comprises a block 27 rigidly anchored to the end of the table 6 nearer the bearing pivot 11.

The assembly 3 further comprises a tilting plate 28 rotatable about a horizontal pivot 29 of which the axis lies in the planes occupied respectively by the top face of the table 6 and by the circular saw blade 4 (see figs 5 and 6). The tilting plate 28 is fashioned with an arcuate slot 30 located above and centred on the axis of the pivot 29, which combines with a fixed pin 31, projecting from the block 27, to establish two limit positions available to the plate 28 itself. In addition, the plate 28 and the block 27 will be interconnected by fastening means (not illustrated) such as allow the plate 28 to be locked in a given angular position relative to the pivot 29.

32 denotes a short column rigidly associated with and extending upward from the tilting plate 28, of which the topmost end carries an arm 33 disposed at right angles to the column itself. The column 32 is disposed parallel to the circular saw blade 4 and stands vertical when the tilting plate 28 is in one of its two limit positions (see fig 5). The arm 33 is disposed substantially parallel to the tilting plate 28, but offset laterally in such a way that the two components combine with the interconnecting column 32 to form an element essentially of "Z" appearance. The arm 33 affords a sliding passage to a pair of parallel rods 34 of which the opposite ends are interconnected by a supporting frame 35; the two rods 34 are mutually parallel, and parallel also to the circular saw blade 4.

36 denotes a casing, proportioned to accommodate and carry a motor 37, which is anchored pivotably to the supporting frame 35 by way of a hinge 39 and rotatable about the relative axis 40. The circular saw blade 4 is keyed to the spindle of the motor 37 in conventional manner, creating a power driven saw head denoted 41 in the drawings. The forwardmost part of the casing 36 affords a grip or handle 38 by means of which the casing itself, and therefore the entire saw head 41, can be rotated in relation to the supporting frame 35 about the hinge 39, the axis 40 the hinge being disposed parallel to the axis of rotation of the circular saw blade 4 (see figs 2, 4, 5 and 6).

As to the operation of the circular saw 1: before proceeding to cut a workpiece 8 of whatever nature, the user will rotate the tilting plate 28 about the horizontal pivot 29 into an angular position giving the desired bevel angle of the blade 4, that is, in relation to the surface afforded by the table 6 and the sliding rests 7; similarly, the table 6 will be rotated about the vertical pivot 11 to the angular position which gives the desired mitre angle of the blade 4, i.e. in relation to the fence 19.

The blade 4 is moved initially toward the block 27 by sliding the parallel rods 34 backward through the arm 33, whereupon the casing 36, together with the entire saw head 41, is rotated upward about the axis 40 of the hinge 39 by raising the handle 38 in such a way as to lift the saw blade 4 clear of the table 6. The work 8 can now be positioned on the table 6 and the rests 7, with the rear edge flush against the fence 19, and the saw head 41 lowered to effect the cut. Where the work 8 happens to be of somewhat fuller width and in any event greater than the nominal cutting width of the blade 4, that is to say, wider than can be cut without moving the blade along the kerf line, the handle 38 is pulled to slide the casing 36 and the saw head 41 forward on the parallel rods 34.

The main advantage afforded by the saw according to the invention is that it affords a generous surface on which to support the work, even with the table 6 in either of its limit positions, while retaining a desirably lightweight structure. This is achieved by having adopted the sliding rests 7, of which the movable surface is rearranged automatically to suit the cutting requirements effectively encountered.

Another advantage of the invention is the generous angular movement allowed to the table 6, achieved by the retraction of the sliding rest 7 on the side to which the table 6 is rotated.

With the sliding rests 7 allowed freedom of axial movement, the width of the table 6 can be increased so as to offer a generous supporting surface to the work 8 even independently of the rests, and without any limitation in angular movement.

Yet another advantage afforded by the invention is that of the increased resistance to agents capable of heightening friction between the various moving parts of the base. In effect, most of these moving parts effectively conceal both the fixed elements and the transmission components by which they are respectively supported and set in motion, thereby disallowing penetration of the dust and/or chips generated when work 8 is cut.

## Claims

1. A portable circular saw of the slide compound type, comprising a base (2), and a saw head (41) equipped with a motorized circular saw blade (4) mounted to a support assembly (3) pivotably associated with a table (6) forming a part of the base (2), wherein the saw head (41) is rotatable together with the table (6) about a vertical axis, pivotable toward and away from the table at least about a horizontal axis, and slidable horizontally in relation to the table between two limit positions,
characterized
- in that the base (2) comprises a plinth (5), surmounted by a table (6) of substantially rectangular embodiment and by two sliding rests (7) disposed within the same plane as that occupied by the table and positioned to support the work (8);
- in that the table (6) and the sliding rests (7) are supported by and connected to the plinth (5) in such a way that the table (6) is rotatable between two angular limit positions about a vertical axis perpendicular to the plinth (5), with the two sliding rests (7) disposed one on either side of the table (6) and capable of linear movement along their respective longitudinal axes;
- in that the table (6) affords a longitudinally disposed slot (14) positioned to coincide with the plane occupied by and accommodating the horizontal sliding movement of the circular saw blade (4); and,
- in that the table (6) and the sliding rests (7) are connected one to another by mechanical means (9) arranged in such a way that a rotation of the table (6) induces retraction of the rest (7) toward which the table is directed and extension of the remaining rest (7).

2. A circular saw as in claim 1, wherein the table (6) exhibits a substantially rectangular appearance and is flanked on either side by two sliding rests (7) likewise substantially rectangular in appearance, each of which affords a face (10) located at the end toward which the rotating table (6) is directed and functioning as a stop by means of which to limit the movement of the table.

3. A circular saw as in claim 1, wherein the table (6) is rigidly associated with a bearing pivot (11) passing through the plinth (5) and coupled to the mechanical connection means (9).

4. A circular saw as in claim 3, wherein mechanical connection means (9) consist in a gear wheel (12) rigidly associated with the bearing pivot (11) and a pair of racks (13) rigidly associated with the sliding rests (7) and engaged in meshing contact with the gear wheel (12).

5. A circular saw as in claim 4, wherein the gear wheel (12) and the racks (13) are positioned above the plinth (5).

6. A circular saw as in claim 3, wherein mechanical connection means (9) consist in two sector gears (15) secured to or integral with opposite sides of the table (6), and a pair of racks (13) rigidly associated with the sliding rests (7) and engaged in meshing contact each with a respective sector gear (15).

7. A circular saw as in claim 4, wherein the gear wheel (12) and the racks (13) are housed internally of a plinth (5) of hollow embodiment.

8. A circular saw as in claim 7, wherein the gear wheel (12) consists in a bevel wheel keyed to the bottom end of the bearing pivot (11), and the two racks (13) are embodied each as an integral part of the respective sliding rest (7) projecting downward internally of a relative longitudinal seating (23), afforded by the plinth (5), of which the bottom is open at least in part to admit a gear (24) engaged in meshing contact with the rack (13) and connected mechanically to the bevel wheel (12).
